# EUROPÄISCHE PATENTSCHRIFT

(11) **EP 3 921 604 B1**
(45) Veröffentlichungstag und Bekanntmachung des Hinweises auf die Patenterteilung: **30.11.2022**
(21) Anmeldenummer: 19828593.4
(22) Anmeldetag: 10.12.2019
(51) Int. Cl.: G01D 18/00, G01C 9/00, G01P 15/00, B65G 1/02, B65G 13/00, B65G 43/08

(54) **VERFAHREN ZUR AUTOMATISCHEN KALIBRIERUNG EINES SENSORMODULS UND SENSORMODUL ZUR DETEKTION VON MATERIALBEHÄLTERN IN EINEM LAGER- ODER TRANSPORTSYSTEM**
METHOD OF AUTOMATIC CALIBRATION OF A SENSOR MODULE AND SENSOR MODULE FOR DETECTION OF MATERIAL CONTAINERS IN A STORAGE OR TRANSPORT SYSTEM
MÉTHODE DE CALIBRATION AUTOMATIQUE D'UN MODULE DE DÉTECTION ET MODULE DE DÉTECTION DE CONTAINEURS DE MATÉRIAUX DANS UN SYSTÈME DE STOCKAGE OU DE TRANSPORT

(30) Priorität: 08.02.2019 DE 102019103212
(43) Veröffentlichungstag der Anmeldung: 15.12.2021
(73) Patentinhaber: Steute Technologies GmbH & Co. KG., 32584 Löhne (DE)
(72) Erfinder: BÖWERING, Gabriel, 32549 Bad Oeynhausen (DE)
(74) Vertreter: Kleine, Hubertus
(86) Internationale Anmeldenummer: PCT/EP2019/084463
(87) Internationale Veröffentlichungsnummer: WO 2020/160816

(56) Entgegenhaltungen:
- DE-U1-202007 012 926
- DE-U1-202017 103 459
- US-A1- 2013 342 029

## Beschreibung

Die Erfindung betrifft ein Verfahren zur automatischen Kalibrierung eines Sensormoduls, das einen Lage- oder Beschleunigungssensor aufweist, über den eine Lage des Sensormoduls als Winkel relativ zu einer festen Raumrichtung gemessenen wird, und das ein Ausgangssignal abgibt, das davon abhängt, ob der gemessene Winkel größer oder kleiner als ein Schaltwinkel ist. Die Erfindung betrifft weiter ein Sensormodul zur Detektion von Materialbehältern in einem Lager- oder Transportsystem. Insbesondere betrifft die Erfindung ein derartiges Sensormodul, das in der Lage ist, seine Eigenschaften selbsttätig an unterschiedliche Einbaulagen anzupassen.

Aus der Druckschrift DE 20 2017 103 459 U1 ist ein Funksensormodul zur Detektion von Materialbehältern bekannt, das eine Halterung und eine darin schwenkbar gelagerte Wippe aufweist, wobei ein Sensor zur Erfassung einer Lage der Wippe und die Übertragungseinrichtung in der Wippe angeordnet sind. In einer Ausgestaltung des Funksensormoduls ist der Sensor ein Beschleunigungssensor, der eine Lage und/oder Lageänderung der Wippe detektiert. In der Wippe kann eine Auswerteeinheit angeordnet sein, die zur Auswertung der von dem Beschleunigungssensor gemessenen Beschleunigungswerte eingerichtet ist. Auf diese Weise kann das Funksensormodul unmittelbar eine Schaltstellung der Wippe übertragen. Die Auswerteeinheit ist zu diesem Zweck beispielsweise mit der Übertragungseinrichtung verbunden und übergibt Informationen über eine Lage und/oder eine Lageänderung der Wippe an die Übertragungseinrichtung.

Bei diesem Konzept erfolgt die Detektion der Lage bzw. Lageänderung somit in Bezug auf die Richtung der Schwerkraft. Nachteilig dabei ist, dass dies Einschränkungen hinsichtlich der Einbaulage des Sensormoduls bedingt, da sich die Schaltpunktlage des Sensormoduls relativ zu seinen Endlagen mit der Neigung der Einbaulage ändert. Dieser Umstand kann bei geneigten Einbaulagen eine Neujustierung der Auswerteeinheit von außen erfordern.

Benötigt wird somit ein Sensormodul der genannten Art, das in unterschiedlichen Einbaulagen betrieben werden kann, ohne dass eine von außen vorzunehmende Anpassung an die jeweilige Einbaulage erforderlich ist.

Die Druckschrift WO 2018/087511 A1 beschreibt eine Sensoreinheit mit einem Absolutrichtungssensor, dessen Messwert durch einen Prozessor zu einem Drehstellungssignal eines Drehelementes aufbereitet wird. Damit diese Sensoreinheit auch bei schwankendem Untergrund verwertbare aufbereitete Messwerte relativ zum schwankenden Untergrund liefert, ist eine entsprechende Kompensation dieser Messwerte erforderlich. Zur Ermittlung des jeweiligen Kompensationsbetrages wird eine ausreichende, innerhalb eines vorgegebenen Zeitraumes ermittelte Anzahl von Messwerten des Absolutrichtungssensors zwischengespeichert. Auf diese Weise kann ein um eine mittlere Lage schwankender Untergrund kompensiert werden, mit dem Verfahren lässt sich eine Anpassung an unterschiedliche, aber stationäre Einbaulagen jedoch nicht erreichen. Zudem werden hohe Anforderungen an die in der Sensoreinheit vorzuhaltende Rechenleistung und Speicherkapazität gestellt, was einen hohen Aufwand bedingt.

Es ist Aufgabe der vorliegenden Erfindung, ein Verfahren für eine automatische Kalibrierung eines Sensormoduls, insbesondere eines Sensormoduls, bei dem eine Lage einer Wippe erfasst wird, zu schaffen, durch das eine automatische Anpassung an eine Einbaulage des Sensormoduls erfolgt. Es ist eine weitere Aufgabe, ein Sensormodul zur Detektion von Materialbehältern in einem Lager- oder Transportsystem bereitzustellen, das sich selbst an eine Einbaulage anpassen kann.

Diese Aufgabe wird durch ein Verfahren bzw. ein Sensormodul mit den Merkmalen des jeweiligen unabhängigen Anspruchs gelöst. Vorteilhafte Ausgestaltungen und Weiterbildungen sind Gegenstand der abhängigen Ansprüche.

Ein erfindungsgemäßes Verfahren der eingangs genannten Art zeichnet sich dadurch aus, dass das Ausgangssignal auf einen ersten Ausgangswert gesetzt wird, wenn der gemessene Winkel den Schaltwinkel übersteigt. Steigt dann der Wert des gemessenen Winkels weiter an, wird der Schaltwinkel auf einen Wert gesetzt, der dem gemessenen Winkel abzüglich eines Aus-Freischwenkwinkels entspricht. Unterschreitet der Wert des gemessenen Winkels den Schaltwinkel, wird das Ausgangssignal auf einen zweiten Ausgangswert gesetzt. Fällt dann der gemessene Winkel weiter, wird der Schaltwinkel auf einen Wert gesetzt, der dem gemessenen Winkel zuzüglich eines Ein-Freischwenkwinkels entspricht. Gemessen kann der Winkel beispielsweise relativ zu einer Richtung einer Gewichtskraft, also relativ zu einer Lotrechten.

Auf diese Weise wird der Schaltwinkel automatisch während der Nutzung des als Wippe ausgebildeten Sensormoduls an den tatsächlich auftretenden Schwenkwinkelbereich angepasst. Der tatsächlich auftretende Schwenkwinkelbereich hängt von der Einbaulage des Sensormoduls ab, an die sich das Sensormodul somit automatisch anpasst. Zudem wird mit den Aus- bzw. Ein-Freischwenkwinkeln eine Art Schalthysterese für das Sensormodul eingestellt, der zu sicheren, nicht fluktuierenden Schaltzuständen beim Umschalten führt.

Vermieden werden so die vorgenannten Nachteile durch ein Sensormodul der genannten Art zur Detektion von Materialbehältern in einem Lager- oder Transportsystem, dessen Auswerteeinheit bei jeder Betätigung seine aktuelle Schaltpunktlage selbsttätig so nachjustiert, dass sie relativ zu den Endlagen innerhalb eines vorgegeben Bereiches liegt.

In einer vorteilhaften Ausgestaltung des Verfahrens erfolgt das Setzen des Schaltwinkels auf einen von dem gemessenen Winkel abhängigen Wert erst dann, wenn der Schaltwinkel um mehr als den Aus-Freischwenkwinkel überschritten bzw. um mehr als den Ein-Freischwenkwinkel unterschritten wird. Alternativ kann auch vorgesehen sein, den Schaltwinkel unmittelbar zu setzen, nachdem der Schaltwinkel über- bzw. unterschritten wird.

In einer weiteren vorteilhaften Ausgestaltung des Verfahrens sind die Größe des Aus-Freischwenkwinkels und die Größe des Ein-Freischwenkwinkels vorgegeben. Sie liegen bevorzugt im Bereich von 1 % bis 50 % und insbesondere im Bereich von 25 % bis 40 % eines maximal möglichen Schwenkbereichs des Sensormoduls.

In einer weiteren vorteilhaften Ausgestaltung des Verfahrens wird der Wert des Ausgangssignals drahtlos in einem Funkverfahren ausgegeben. Der erste bzw. zweite Wert des Ausgangssignals entsprechen z.B. den Zuständen "frei" bzw. "betätigt" des als Wippe ausgebildeten Sensormoduls.

Ein erfindungsgemäßes Sensormodul weist einen Lage- oder Beschleunigungssensor auf, über den eine Lage des Sensormoduls als Winkel relativ zu einer festen Raumrichtung messbar ist. Das Sensormodul weist weiter eine Auswerteeinheit für ein Signal des Lage- oder Beschleunigungssensors auf, das ein Ausgangssignal abhängig von dem gemessenen Winkel ausgibt. Das Sensormodul zeichnet sich dadurch aus, dass die Auswerteeinheit zur Durchführung eines der zuvor genannten Verfahren eingerichtet ist. Es ergeben sich die im Zusammenhang mit dem Verfahren genannten Vorteile: Das Sensormodul passt seine Schaltpunkt automatisch an die gewählte Einbaulage an.

Die Erfindung wird nachfolgend anhand eines Ausführungsbeispiels mit Hilfe von Figuren näher erläutert. Es zeigt
- Fig. 1: eine isometrische Ansicht eines Ausführungsbeispiels eines Sensormoduls, das an einer Rollenbahn angebracht ist;
- Fig. 2: die Lage von Rollenbahnebenen und mittleren Schaltpunktlagen am Sensormodul nach Fig. 1 bei zwei unterschiedlichen Neigungen; und
- Fig. 3a-e: die Schaltpunktlagen des Sensormoduls nach Fig. 1 sowie die zugehörigen Winkelbereiche bei unterschiedlichen Sensormodulstellungen und Neigungen der Rollenbahnebene.

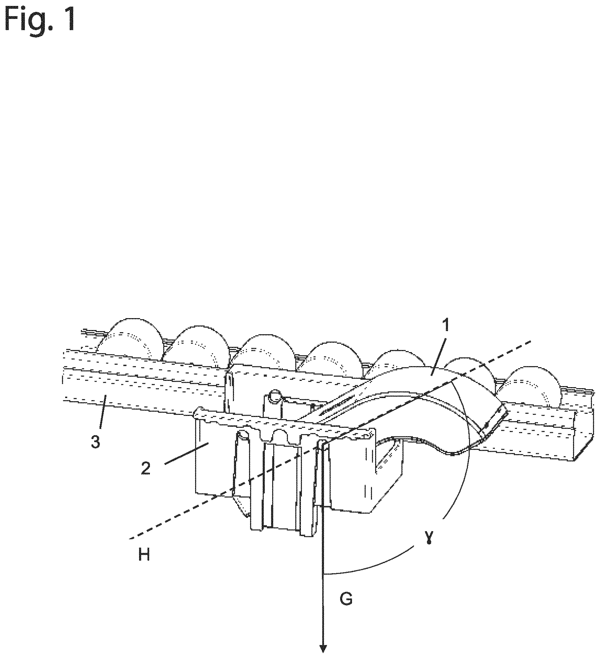

Das in Fig. 1 dargestellte Ausführungsbeispiel eines als Wippe ausgebildeten Sensormoduls 1 ist mittels einer Halterung 2 an einer geneigten Rollenbahn 3 angeordnet. Dargestellt ist ferner die Richtung G der Schwerkraft sowie ein Winkel γ zwischen einer Hauptebene H des Sensormoduls 1 und der Richtung G der Schwerkraft, der für die Neigung des Sensormoduls um seine Lagerachse im Raum kennzeichnend ist. Der Winkel γ ist die Messgröße eines im Sensormodul 1 angeordneten Beschleunigungs- oder Lagesensors, im Folgenden Sensor genannt.

Die Gewichtsverteilung der Wippe, d.h. des Sensormoduls 1, ist so gewählt, dass sie im nicht niedergedrückten Zustand schwerkraftbedingt eine Ruhelage innerhalb der Halterung 2 einnimmt. In dieser Ruhelage ist die Wippe in Fig. 1 dargestellt.

Die Lage des Sensormoduls 1 wird vom Sensor in Form des Winkels bzw. einer den Winkel repräsentierenden Messgröße erfasst, dessen Messwert in einer zum Sensormodul 1 gehörenden und mit diesem einstückig ausgeführten Auswerteeinheit in ein Ausgangssignal umgewandelt wird, das in der Ruhelage einen Zustand "aus" oder "frei" repräsentiert. Sobald sich nun auf der Rollenbahn 3 über der Wippe ein (nicht gezeigter) Gegenstand, beispielsweise ein Materialbehälter befindet, drückt dieser den nach oben aus der Halterung 2 herausragenden Teil der Wippe nieder. Diese neue Stellung "niedergedrückt" wird wiederum von dem im Sensormodul 1 angeordneten Sensor erfasst, dessen Messwert nun in ein Ausgangssignal umgewandelt wird, das einen Zustand "ein" oder "betätigt" repräsentiert.

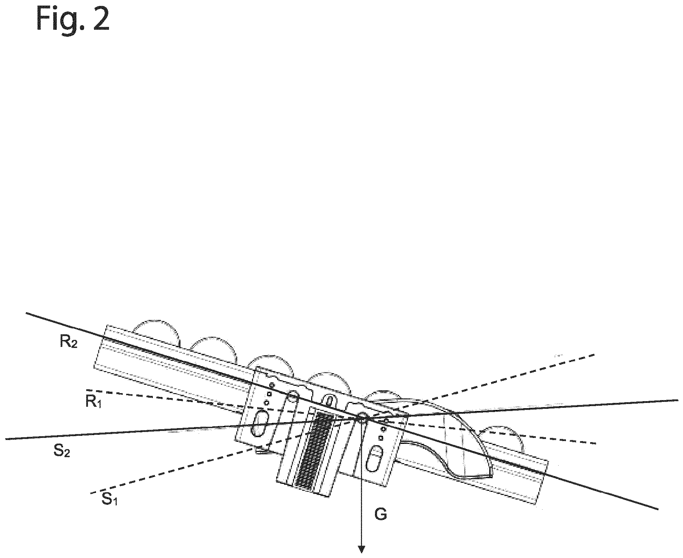

Fig. 2 zeigt als Beispiel für die Aufgabenstellung der Erfindung die Anordnung nach Fig. 1, die nacheinander in zwei beispielhaften Ebenen mit einer ersten Neigung R₁ und mit einer zweiten Neigung R₂ der Rollenbahn ausgerichtet wird. Dargestellt sind Rollenbahn 3, Halterung 2 und Sensormodul 1 mit der zweiten Rollbahnneigung R₂, wobei das Sensormodul 1 in einer mittleren Schaltpunktlage S₂ gezeigt ist. Als Schaltpunktlage wird dabei jeweils die Lage bezeichnet, an der die Signalisierung vom Zustand "ein" zum Zustand "aus" oder umgekehrt wechselt. Die zugehörige Geometrie ist in Volllinien gezeichnet. Der Übersichtlichkeit halber sind bezüglich der ersten Neigung lediglich die Rollenbahnebene R₁ und eine mittlere Schaltpunktlage S₁ in gestrichelten Linien gezeigt.

Bei einem Sensormodul gemäß dem Stand der Technik, beispielsweise gemäß der Druckschrift DE 20 2017 103 459 U1, ist es unumgänglich, die Schaltpunktlage händisch an die Einbaulage anzupassen, so dass ein zuverlässiges Umschalten der Ausgangszustände beim Niederdrücken der Wippe erfolgt.

Ein anmeldungsgemäßes Sensormodul 1 ist dagegen dazu eingerichtet, auch bei verschiedenen Einbaulagen, z.B. bei den beiden Neigungen R₁ und R₂ der Rollenbahnebene, das unter Fig. 1 beschriebene Signalisierungsverhalten zu zeigen, ohne dass hierzu eine gesonderte Anpassung, insbesondere eine manuelle Anpassung von außen, vorgenommen werden muss.

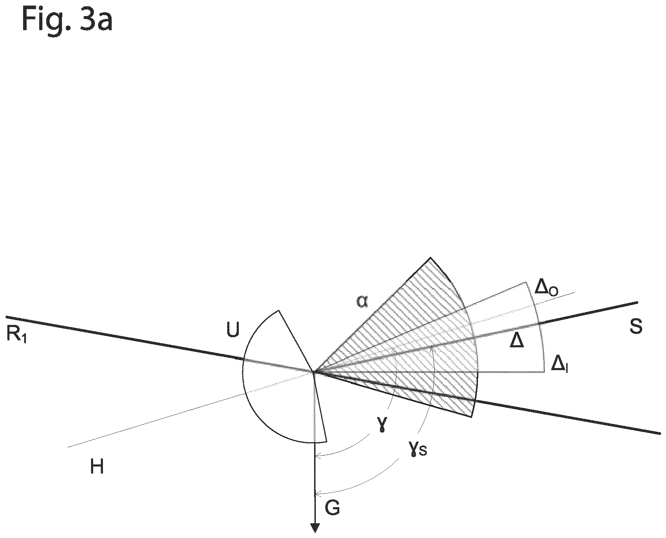

Im Zusammenhang mit den Fig. 3a-e wird nachfolgend veranschaulicht, wie ein erfindungsgemäßes Sensormodul 1 sein Signalisierungsverhalten selbsttätig an die Neigung einer Rollenbahn anpasst.

Als Beispiel wird hierzu gezeigt, wie die Anpassung der Signalisierung von einem Auslieferungszustand zunächst an eine Rollenbahnneigung R₁ erfolgt. Anschließend wird die Rollenbahnneigung in eine Rollenbahnneigung R₂ geändert und gezeigt, wie das Sensormodul seine Signalisierung an die Neigung 2 anpasst.

In Fig. 3a symbolisiert die Linie R₁ eine Rollenbahn in einer ersten Rollenbahnneigung R₁. An dieser Rollenbahn ist das erfindungsgemäße Sensormodul in einem möglichen Auslieferungszustand derart angebracht, dass seine Hauptebene H in einem mittleren Bereich eines möglichen Schwenkbereiches α liegt. α ist dabei durch die mechanischen Anschläge des Sensormoduls 1 in seiner Halterung definiert, die in der Praxis allerdings in der Regel durch das Sensormodul nicht ganz erreicht werden.

In dieser Situation weist das Sensormodul eine Schaltpunktlage S auf, die beispielsweise herstellungsseitig in einem Auslieferungszustand voreingestellt ist oder die zufällig nach einer ersten Bestromung des Sensormoduls eingestellt ist. Um diese Schaltpunktlage S ist der Gesamt-Freischwenkwinkel Δ aufgespannt, der aus dem Aus-Freischwenkwinkel Δ_{O} auf der Aus-Seite der Schaltpunktlage und dem Ein-Freischwenkwinkel Δ_{I} auf der Ein-Seite der Schaltpunktlage besteht. Bei Werten des Winkels γ, die im Ungültigkeits-Bereich U liegen, kann das beispielhafte Sensormodul aufgrund des verwendeten Sensors nicht betrieben werden. Bei Verwendung anderer Sensoren besteht diese Einschränkung möglicherweise nicht.

Im Sensormodul 1 wird die Schaltpunktlage durch einen Schaltwinkel γ_{S} repräsentiert. Dieser Schaltwinkel γ_{S} ist z.B. in einem Speicher einer Auswerteeinheit des Sensormoduls 1 abgelegt. Das Ausgangssignal der Sensoreinheit 1 mit den Schaltzuständen "ein" bzw. "aus" wird abhängig von einem Vergleich des gemessenen Winkels γ mit dem Schaltwinkel γ_{S} gesetzt.

Im Folgenden ist beschrieben, wie sich das Sensormodul aus dem beschriebenen Auslieferungszustand heraus an die Neigung der Rollenbahnebene R₁ anpasst. Bei anderen Auslieferungszuständen, insbesondere, wenn die Schaltpunktlage S sehr stark von der gezeigten Schaltpunktlage abweicht, kann es erforderlich sein, das Sensormodul den Schwenkbereich α weitestmöglich in beiden Richtungen durchlaufen zu lassen, um den Anpassungsvorgang vollständig durchzuführen. Wie der Durchschnittsfachmann erkennen wird, basiert die Wirkungsweise dabei gänzlich auf den nachstehend beschriebenen Vorgängen, weswegen dieser Fall nicht gesondert beschrieben ist.

Nach Montage und Inbetriebnahme des Sensormoduls schwenkt dieses in Abwesenheit eines Behälters auf der Rollenbahn in die Stellung "freigegeben", wobei die Hauptebene sich entweder bereits im Aus-Freischwenkwinkel Δ_{O} des Sensors befindet oder nach Überschreiten der Schaltpunktlage S in diesen gelangt. Mit anderen Worten: Sobald der gemessene Winkel γ den Schaltwinkel γ_{S} übersteigt, gibt das Sensormodul 1 das Ausgangssignal "aus" aus. Wenn nun der gemessene Winkel γ weiter ansteigt weil die Wippe weiter hochschwenkt und der gemessene Winkel γ größer wird als der Schaltwinkel γ_{S} zuzüglich dem Wert des Aus-Freischwenkwinkels Δ_{O}, wird der Schaltwinkel γ_{S} gleich dem gemessenen Winkel γ abzüglich dem Wert des Aus-Freischwenkwinkels Δ_{O} gesetzt. In einer alternativen Ausgestaltung des Verfahrens kann auch vorgesehen sein, diesen Wert unmittelbar bereits dann zu setzen, wenn der gemessene Winkel γ den Schaltwinkel γ_{S} übersteigt, d.h. auch beim erstmaligen Überschreiten.

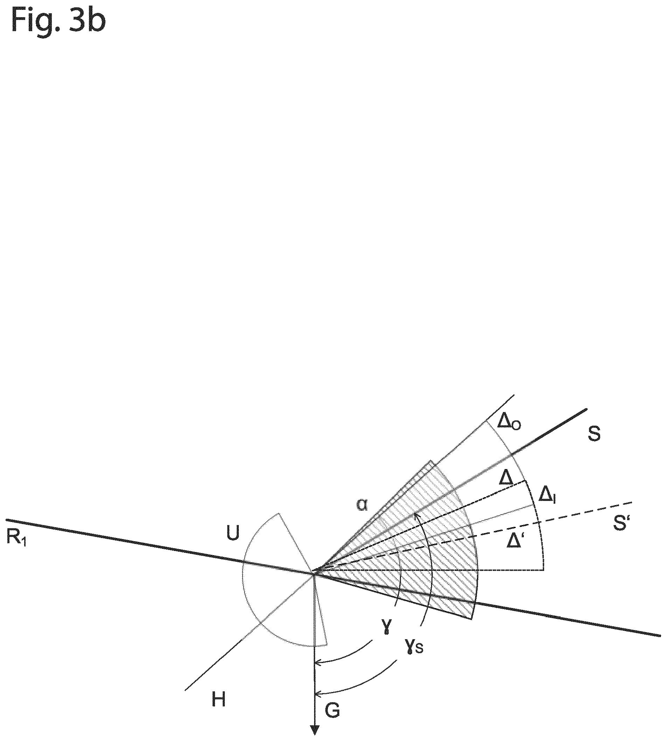

Anmeldungsgemäß wird also der Schaltwinkel γ_{S} bei steigendem gemessenen Winkel γ immer so mitgeführt, dass der Aus-Freischwenkwinkels Δ_{O} eine Art (Einschalt-)Hysterese für das Sensormodul 1darstellt. Die Schaltpunktlage S wird also in gleichbleibendem Abstand zur Hauptebene H nachführend mitverschwenkt. Da der Gesamt-Freischwenkwinkel Δ relativ zur Schaltpunktlage S festliegt, wird auch dieser mitverschwenkt, sodass sich, wie in Fig. 3b gezeigt, nach vollständigem Freigeben des Sensormoduls dessen Hauptebene H mitsamt dem der Schaltpunktlage S abgewandten Schenkel des Aus-Freischwenkwinkels Δ_{O} nahe dem Aus-seitigen Schenkel des Schwenkbereiches α befindet.

Zum besseren Verständnis sind in Fig. 3b außerdem die Schaltpunktlage S' und der Freischwenkwinkel Δ' dargestellt, die der Schaltpunktlage S und dem Freischwenkwinkel Δ aus Fig. 3a entsprechen.

Wird das Sensormodul aus dieser Lage durch das Eintreffen eines Behälters auf der Rollenbahn niedergedrückt, behält der Sensor die Schaltpunktlage S zunächst bei. Durchläuft die Hauptebene H während des Schwenkens die Schaltpunktlage S, wird der gemessene Winkel γ kleiner als der Schaltwinkel γ_{S}, woraufhin das Ausgangssignal von "aus" auf "ein" wechselt. Ab der Stellung der Hauptebene H, in der beim weiteren Schwenken in Richtung "niedergedrückt" der der Schaltpunktlage S abgewandte Schenkel des Ein-Freischwenkwinkels Δ_{I} erreicht worden ist, wird die Schaltpunktlage S in gleichbleibendem Abstand zur Hauptebene H nachführend mitverschwenkt.

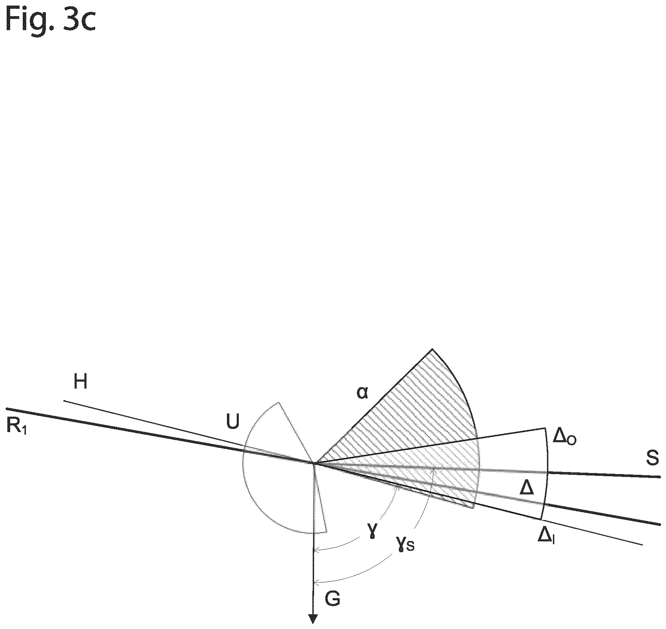

Oder, bezogen auf den gemessenen Winkel γ: Sobald der gemessene Winkel γ kleiner wird als der Schaltwinkel γ_{S} abzüglich des Ein-Freischwenkwinkels Δ_{I}, wird der Schaltwinkel γ_{S} auf den gemessenen Winkel γ zuzüglich des Ein-Freischwenkwinkels Δ_{I} gesetzt. Da der Gesamt-Freischwenkwinkel Δ relativ zur Schaltpunktlage festliegt, wird auch dieser mitverschwenkt, sodass sich, wie in Fig. 3c gezeigt, nach vollständigem Niederdrücken des Sensormoduls dessen Hauptebene H mitsamt dem der Schaltpunktlage S abgewandten Schenkel des Ein-Freischwenkwinkels Δ_{I} nahe dem Ein-seitigen Schenkel des Schwenkbereiches α befindet.

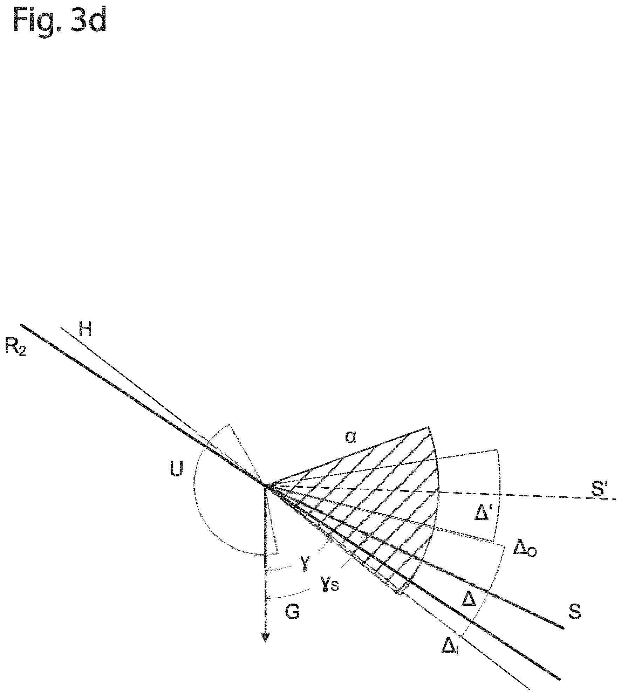

Fig. 3d zeigt die Situation nach einer Änderung der Rollenbahnebene mit niedergedrücktem Sensormodul von der ersten, R₁ entsprechenden Neigung in eine zweite, R₂ entsprechende Neigung. Zwar kommt in der Praxis in der Regel eine derartige Änderung der Rollenbahnneigung nicht vor, jedoch ist dieses Beispiel geeignet, die Funktionsweise der selbsttätigen Anpassung des Sensormoduls zu veranschaulichen.

Bedingt durch die größere Neigung der Rollenbahnebene R₂ nimmt der Winkel γ der Sensormodul-Hauptebene H weiter ab. Der Schwenkbereich α liegt relativ zur Rollenbahnebene fest und folgt damit deren Neigungsänderung. Die Schwenkbewegung, die das Sensormodul dazu relativ zur Schwerkraft durchführt, gleicht der im Zusammenhang mit Fig. 3c beschriebenen Schwenkbewegung in Richtung "Niederdrücken". Wie dort, werden auch hier die Schaltpunktlage S, d.h. der Schaltwinkel γ_{S} und der Gesamt-Freischwenkwinkel Δ mitverschwenkt, sodass sich nach erfolgter Vergrößerung der Neigung relativ zur Rollenbahnebene R₂ dieselbe Situation wie in Fig. 3c relativ zur Rollenbahnebene R₁ einstellt.

Zum besseren Verständnis sind in Fig. 3d außerdem die Schaltpunktlage S' und der Freischwenkwinkel Δ' dargestellt, die der Schaltpunktlage S und dem Freischwenkwinkel Δ aus Fig. 3c entsprechen.

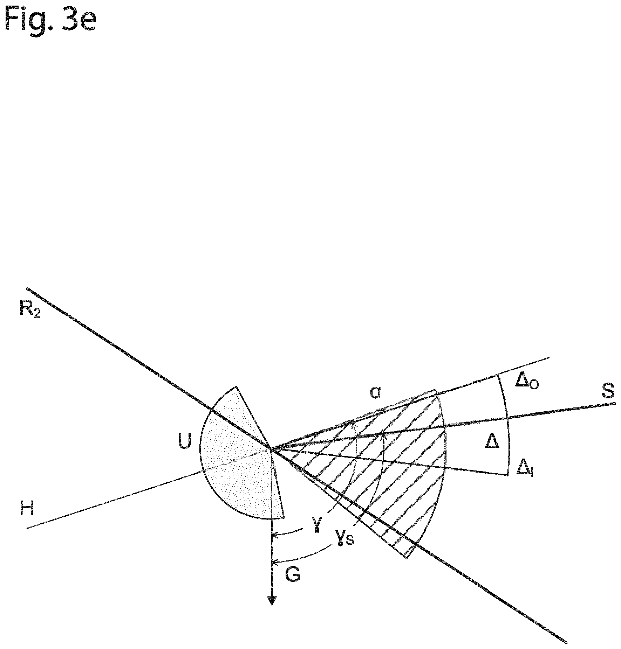

Wird das Sensormodul aus dieser Lage durch das Entfernen des Behälters auf der Rollenbahn freigegeben, ergibt sich ein Vorgang ähnlich dem im Zusammenhang mit Fig. 3b beschriebenen. Der Sensor behält die Schaltpunktlage S zunächst bei. Durchläuft die Hauptebene H während des Schwenkens die Schaltpunktlage S, wechselt das Signal von "ein" auf "aus". Ab der Stellung der Hauptebene H, in der beim weiteren Schwenken in Richtung "freigegeben" der der Schaltpunktlage S abgewandte Schenkel des Aus-Freischwenkwinkels Δ_{O} erreicht worden ist, wird die Schaltpunktlage S in gleichbleibendem Abstand zur Hauptebene H nachführend mitverschwenkt, indem der Schaltwinkel γ_{S} nun wiederum gleich dem gemessenen Winkel γ abzüglich des Aus-Freischwenkwinkels Δ_{O} gesetzt wird. Da der Gesamt-Freischwenkwinkel Δ relativ zur Schaltpunktlage S festliegt, wird auch dieser mitverschwenkt, sodass sich, wie in Fig. 3e gezeigt, nach vollständigem Freigeben des Sensormoduls dessen Hauptebene H mitsamt dem der Schaltpunktlage S abgewandten Schenkel des Aus-Freischwenkwinkels Δ_{O} nahe dem Aus-seitigen Schenkel des Schwenkbereiches α befindet.

### Bezugszeichen

- 1: Sensormodul
- 2: Halterung
- 3: Rollenbahn
- H: Sensormodul-Hauptebene
- G: Gewichtskraft
- γ: Gemessener Winkel zwischen Sensormodul-Hauptebene und Richtung der Gewichtskraft
- γ_{S}: Schaltwinkel
- R₁: Rollenbahnebene mit einer ersten Neigung
- R₂: Rollenbahnebene mit einer zweiten Neigung
- S₁: Mittlere Schaltpunktlage für Rollenbahnebene mit einer ersten Neigung
- S₂: Mittlere Schaltpunktlage für Rollenbahnebene mit einer zweiten Neigung
- S: Schaltpunktlage
- S': Vorherige Schaltpunktlage
- α: Möglicher Schwenkbereich des Sensormoduls
- Δ: Gesamt-Freischwenkwinkel
- Δ': Gesamt-Freischwenkwinkel gemäß vorheriger Figur
- Δ_{O}: Aus-Freischwenkwinkel
- Δ_{I}: Ein-Freischwenkwinkel
- U: Ungültigkeits-Bereich

## Patentansprüche

1. Verfahren zur automatischen Kalibrierung eines als Wippe ausgebildeten Sensormoduls(1), das einen Lage- oder Beschleunigungssensor aufweist, über den eine Lage des Sensormoduls (1) als Winkel (γ) relativ zu einer festen Raumrichtung gemessenen wird, und das ein Ausgangssignal abgibt, das davon abhängt, ob der gemessene Winkel (γ) größer oder kleiner als ein Schaltwinkel (γ_{S}) ist, mit den folgenden Schritten:
- Setzen des Ausgangssignals auf einen ersten Ausgangswert, wenn der gemessene Winkel (γ) den Schaltwinkel (γ_{S}) übersteigt;
- Setzen des Schaltwinkels (γ_{S}) auf einen Wert, der dem gemessenen Winkel (γ) abzüglich eines Aus-Freischwenkwinkels (Δ_{O}) entspricht, solange der Wert des gemessenen Winkels (γ) weiter steigt; und
- Setzen des Ausgangssignals auf einen zweiten Ausgangswert, wenn der gemessene Winkel (γ) den Schaltwinkel (γ_{S}) unterschreitet;
- Setzen des Schaltwinkels (γ_{S}) auf einen Wert, der dem gemessenen Winkel (γ) zuzüglich eines Ein-Freischwenkwinkels (Δ_{I}) entspricht, solange der Wert des gemessenen Winkels (y) weiter sinkt.

2. Verfahren nach Anspruch 1, bei dem das Setzen des Schaltwinkels (γ_{S}) auf einen von dem gemessenen Winkel (γ) abhängigen Wert erst erfolgt, wenn der Schaltwinkel (γ_{S}) um mehr als den Aus-Freischwenkwinkel (Δ_{O}) überschritten bzw. um mehr als den Ein-Freischwenkwinkel (Δ_{I}) unterschritten wird.

3. Verfahren nach Anspruch 1, bei dem das Setzen des Schaltwinkels (γ_{S}) auf einen von dem gemessenen Winkel (γ) abhängigen Wert unmittelbar erfolgt, nachdem der Schaltwinkel (γ_{S}) über- bzw. unterschritten wird.

4. Verfahren nach einem der Ansprüche 1 bis 3, bei dem die Größe des Aus-Freischwenkwinkel (Δ_{O}) und die Größe des Ein-Freischwenkwinkel (Δ_{I}) vorgegeben sind.

5. Verfahren nach Anspruch 4, bei dem die Größe des Aus-Freischwenkwinkel (Δ_{O}) und die Größe des Ein-Freischwenkwinkel (Δ_{I}) im Bereich von 1 % bis 50 % und insbesondere im Bereich von 25 % bis 40 % eines maximal möglichen Schwenkbereichs (α) des Sensormoduls (1) liegt.

6. Verfahren nach einem der Ansprüche 1 bis 5, bei dem der Winkel (γ) relativ zu einer Richtung einer Gewichtskraft (G) gemessen wird.

7. Verfahren nach einem der Ansprüche 1 bis 6, bei dem der Wert des Ausgangssignals drahtlos in einem Funkverfahren ausgegeben wird.

8. Sensormodul (1) zur Detektion von Materialbehältern in einem Lager- oder Transportsystem, aufweisend einen Lage- oder Beschleunigungssensor, über den eine Lage des Sensormoduls (1) als Winkel (γ) relativ zu einer festen Raumrichtung messbar ist, und aufweisend eine Auswerteeinheit für ein Signal des Lage- oder Beschleunigungssensors zur Ausgabe eines Ausgangssignals abhängig von dem gemessene Winkel (γ), **dadurch gekennzeichnet, dass** die Auswerteeinheit zur Durchführung eines Verfahrens nach einem der vorherigen Ansprüche eingerichtet ist.

## Claims

1. Method for automatically calibrating a sensor module (1) in the form of a rocker, which has a position or acceleration sensor via which a position of the sensor module (1) is measured as an angle (γ) relative to a fixed spatial direction, and which outputs an output signal which depends on whether the measured angle (γ) is greater than or less than a switching angle (ys), having the following steps:
- setting the output signal to a first output value when the measured angle (γ) exceeds the switching angle (ys);
- setting the switching angle (ys) to a value equal to the measured angle (γ) minus an off free pivot angle (Δ_{O}) as long as the value of the measured angle (γ) continues to increase; and
- setting the output signal to a second output value if the measured angle (γ) falls below the switching angle (ys);
- setting the switching angle (ys) to a value corresponding to the measured angle (γ) plus an on free pivot angle (Δ_{I}) as long as the value of the measured angle (γ) continues to decrease.

2. Method according to claim 1, in which the setting of the switching angle (ys) to a value dependent on the measured angle (γ) only takes place when the switching angle (ys) is exceeded by more than the off free pivot angle (Δ_{O}) or is undershot by more than the on free pivot angle (Δ_{I}).

3. Method according to claim 1, in which setting the switching angle (ys) to a value dependent on the measured angle (γ) occurs immediately after the switching angle (ys) is exceeded or undershot.

4. Method according to one of claims 1 to 3, in which the magnitude of the off free pivot angle (Δ_{O}) and the magnitude of the on free pivot angle (Δ_{I}) are predetermined.

5. Method according to claim 4, in which the magnitude of the off free pivot angle (Δ_{O}) and the magnitude of the on free pivot angle (Δ_{I}) are in the range of 1% to 50% and in particular in the range of 25% to 40% of a maximum possible pivot range (α) of the sensor module (1).

6. Method according to one of claims 1 to 5, in which the angle (γ) is measured relative to a direction of a weight force (G).

7. Method according to one of claims 1 to 6, in which the value of the output signal is output wirelessly in a radio method.

8. Sensor module (1) for detecting material containers in a storage or transport system, having a position or acceleration sensor, via which a position of the sensor module (1) can be measured as an angle (γ) relative to a fixed spatial direction, and having an evaluation unit for a signal of the position or acceleration sensor for outputting an output signal as a function of the measured angle (γ), **characterized in that** the evaluation unit is set up to carry out a method according to one of the preceding claims.

## Revendications

1. Procédé pour l'étalonnage automatique d'un module de capteur (1) conformé comme une bascule, comportant un capteur de position ou d'accélération qui mesure une position du module de capteur (1) sous la forme d'un angle (γ) par rapport à une direction fixe dans l'espace et qui émet un signal de sortie qui dépend du fait que l'angle (γ) mesuré est plus grand ou plus petit qu'un angle de commutation (γs), comprenant les étapes suivantes :
- réglage du signal de sortie à une première valeur de sortie si l'angle (γ) mesuré dépasse l'angle de commutation (γs),
- réglage de l'angle de commutation (γs) à une valeur correspondant à l'angle (γ) mesuré moins un angle de pivotement libre en dehors (Δₒ) tant que la valeur de l'angle (γ) mesuré continue à augmenter, et
- réglage du signal de sortie à une deuxième valeur de sortie si l'angle (γ) mesuré passe en dessous de l'angle de commutation (γs),
- réglage de l'angle de commutation (γs) à une valeur correspondant à l'angle (γ) mesuré plus un angle de pivotement libre en dedans (Δᵢ) tant que la valeur de l'angle (γ) mesuré continue à diminuer.

2. Procédé selon la revendication 1, dans lequel le réglage de l'angle de commutation (γs) à une valeur dépendante de l'angle (γ) mesuré n'a lieu que lorsque la valeur d'angle passe au-dessus de l'angle de commutation (γs) de plus que l'angle de pivotement libre en dehors (Δ_{O}) ou passe en dessous de plus que l'angle de pivotement libre en dedans (Δᵢ).

3. Procédé selon la revendication 1, dans lequel le réglage de l'angle de commutation (γs) à une valeur dépendante de l'angle (γ) mesuré a lieu dès que la valeur d'angle passe au-dessus ou en dessous de l'angle de commutation (γs).

4. Procédé selon l'une des revendications 1 à 3, dans lequel la grandeur de l'angle de pivotement libre en dehors (Δₒ) et celle de l'angle de pivotement libre en dedans (Δᵢ) sont prédéfinies.

5. Procédé selon la revendication 4, dans lequel la grandeur de l'angle de pivotement libre en dehors (Δₒ) et celle de l'angle de pivotement libre en dedans (Δᵢ) se situent dans une plage de 1 % à 50 % et en particulier dans une plage de 25 % à 40 % d'une plage de pivotement maximale possible (α) du module de capteur (1).

6. Procédé selon l'une des revendications 1 à 5, dans lequel l'angle (y) est mesuré par rapport à la direction de la force de pesanteur (G).

7. Procédé selon l'une des revendications 1 à 6, dans lequel la valeur du signal de sortie est émise sur une sortie sans fil par une méthode par radio.

8. Module de capteur (1) pour la détection de contenants de matériaux dans un système de stockage ou de transport, comportant un capteur de position ou d'accélération qui peut mesurer une position du module de capteur (1) sous la forme d'un angle (γ) par rapport à une direction fixe dans l'espace et comportant une unité d'analyse pour un signal du capteur de position ou d'accélération, destinée à émettre un signal de sortie en fonction de l'angle (y) mesuré, **caractérisé en ce que** l'unité d'analyse est configurée pour exécuter un procédé selon l'une des revendications précédentes.
